(19) Europäisches Patentamt
European Patent Office
Office européen des brevets

(11) **EP 2 597 707 B1**

(12) **EUROPEAN PATENT SPECIFICATION**

(45) Date of publication and mention
of the grant of the patent:
**19.12.2018 Bulletin 2018/51**

(51) Int Cl.:
*H01M 4/38* (2006.01)    *H01M 4/134* (2010.01)
*H01M 10/0525* (2010.01)    *H01M 4/1395* (2010.01)
*H01M 4/133* (2010.01)    *H01M 4/587* (2010.01)
*H01M 4/1393* (2010.01)    *H01M 4/36* (2006.01)

(21) Application number: **12189586.6**

(22) Date of filing: **23.10.2012**

(54) **Composite negative active material, method of preparing the same, and lithium secondary battery including the same**

Negatives Aktivmaterial aus Verbundstoff, Verfahren zu seiner Herstellung, Lithiumsekundärbatterie damit

Matériau composite à activité négative, procédé de préparation associé et batterie secondaire au lithium le comprenant

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.11.2011 KR 20110122392**

(43) Date of publication of application:
**29.05.2013 Bulletin 2013/22**

(73) Proprietor: **Samsung Electronics Co., Ltd.
Gyeonggi-do 443-742 (KR)**

(72) Inventors:
• **Park, Jin-hwan**
  **449-712 Gyeonggi-do (KR)**
• **Whang, Dong-mok**
  **Seoul (KR)**
• **Woo, Sun-hwak**
  **Seoul (KR)**

(74) Representative: **Elkington & Fife LLP
Prospect House
8 Pembroke Road
Sevenoaks
Kent TN13 1XR (GB)**

(56) References cited:
EP-A1- 2 579 366    EP-A2- 2 736 837
WO-A1-2010/135446    DE-A1-102005 011 940
US-A1- 2009 068 553

• CHOU S L ET AL: "Enhanced reversible lithium storage in a nanosize silicon/graphene composite", ELECTROCHEMISTRY COMMUNICATIONS, ELSEVIER, AMSTERDAM, NL, vol. 12, no. 2, 1 February 2010 (2010-02-01), pages 303-306, XP026858676, ISSN: 1388-2481, DOI: 10.1016/J.ELECOM.2009.12.024 [retrieved on 2010-01-16]
• WILSON A M ET AL: "LITHIUM INSERTION IN CARBONS CONTAINING NANODISPERSED SILICON", JOURNAL OF THE ELECTROCHEMICAL SOCIETY, ECS, vol. 142, no. 2, 1 February 1995 (1995-02-01), pages 326-332, XP002042127, ISSN: 0013-4651
• WANLI XU ET AL: "Composite Silicon Nanowire Anodes for Secondary Lithium-Ion Cells", JOURNAL OF THE ELECTROCHEMICAL SOCIETY, vol. 157, no. 1, 1 January 2010 (2010-01-01), page A41, XP055054399, ISSN: 0013-4651, DOI: 10.1149/1.3251341
• A. MAGASINSKI ET AL: "High-performance lithium-ion anodes using a hierarchical bottom-up approach", NATURE MATERIALS, vol. 9, no. 4, 1 April 2010 (2010-04-01), pages 353-358, XP055024468, ISSN: 1476-1122, DOI: 10.1038/nmat2725
• WANG Z ET AL: "Synthesis of monolithic 3D ordered macroporous carbon/nano-silicon composites by diiodosilane decomposition", CARBON, ELSEVIER, OXFORD, GB, vol. 46, no. 13, 1 November 2008 (2008-11-01), pages 1702-1710, XP025469434, ISSN: 0008-6223, DOI: 10.1016/J.CARBON.2008.07.015 [retrieved on 2008-07-24]

**Description**

BACKGROUND OF THE INVENTION

The present disclosure relates to a composite negative active material, a method of preparing the same, and a lithium secondary battery including the same, and more particularly, to a composite negative active material with improved lifetime characteristics, a method of preparing the same, and a lithium secondary battery including the same.

Lithium secondary batteries used in portable electronic devices for information and telecommunication, such as a personal digital assistant (PDA), a mobile phone, and a notebook computer, or an electric bicycle and an electric vehicle, have discharge voltages that are twice or more higher than those of general batteries, and as a result, lithium secondary batteries may exhibit high energy densities.

In a state of charging an organic electrolyte or a polymer electrolyte between a positive electrode and a negative electrode including active materials capable of having lithium ions intercalated therein and deintercalated therefrom, a lithium secondary battery generates electrical energy via oxidation and reduction reactions in which lithium ions are intercalated into and deintercalated from the positive electrode and the negative electrode, respectively.

Exemplary embodiment of a positive active material for a lithium secondary battery may be oxides including lithium and transition metals and having a structure enabling intercalation of lithium ions such as lithium cobalt oxide ($LiCoO_2$), lithium nickel oxide ($LiNiO_2$), or lithium nickel cobalt manganese oxides ($Li[NiCoMn]O_2$ and $Li[Ni_{1-x-y}Co_xMn_y]O_2$).

Various carbon-based materials including artificial graphite, natural graphite, or hard carbon, which are capable of having lithium ions intercalated therein and deintercalated therefrom, are used as a negative active material. However, when a negative electrode plate is prepared by using graphite, such as artificial graphite or natural graphite, as an active material among the carbon-based materials, a capacity thereof may be low in terms of energy density per unit volume of the negative electrode plate due to a low plate density of the negative electrode.

Also, a non-carbon-based material such as silicon (Si) has a capacity density of 10 times or more in comparison to that of graphite and may exhibit very high capacity. However, cycle lifetime characteristics of the non-carbon-based material may degrade due to volume expansion and contraction thereof during lithium charge and discharge.

Therefore, there is a need to develop a negative active material of which lifetime characteristics thereof are improved by minimizing stress due to the volume expansion and contraction of the non-carbon-based material such as Si during lithium charge and discharge.

DE 10 2005 011 940 A1 discloses a process for producing coated carbon particles, which comprises coating electrically conductive carbon particles with elemental doped or undoped silicon by chemical vapor deposition from at least one gaseous silane in an oxygen-free gas atmosphere in a reaction space, and their use in anode materials for lithium ion batteries.

Wanli Xu et al. in Journal of the Electrochemical Society, 157(1), A41-A45 (2010) disclose composite silicon nanowire anodes for secondary lithium-ion cells.

US 2009/0068553A1 discloses a paper comprising a silicon-coated web of carbon nanofibers.

A. Magasinski et al. in Nature Materials, Vol. 9 (2010), pages 353-358 disclose an anode active material comprising silicon nanoparticles formed on the surface of annealed carbon black.

WO 2010/135446 A1 discloses Si-based nanostructures disposed on carbon-based substrates.

Zhiyong Wang et al. in Carbon (46), 2008, pages 1702-1710 disclose monolithic carbon/nano-silicon composites with a three-dimensionally ordered macroporous structure.

SUMMARY OF THE INVENTION

Provided is a composite negative active material having improved cycle lifetime characteristics.

Provided is a method of preparing a composite negative active material having improved cycle lifetime characteristics.

Provided is a lithium secondary battery having improved cycle lifetime characteristics.

Additional aspects will be set forth in part in the description which follows and, in part, will be apparent from the description, or may be learned by practice of the presented embodiments.

According to an aspect of the present invention, a composite negative active material includes: a porous carbon-based material; and metal nanostructures disposed on one or more of a surface and inner pores of the porous carbon-based material.

The metal nanostructures are grown based on metal catalyst particles disposed on the surface and the inner pores of the porous carbon-based material.

The metal catalyst particles may be selected from the group of gold (Au), copper (Cu), aluminum (Al), silver (Ag), and nickel (Ni).

The metal nanostructures may include one or more elements selected from the group of groups 13 and 14 of the Periodic Table.

The metal nanostructures may include Si-based metal nanostructures.

The metal nanostructures include metal nanowires.

An average diameter of the metal nanowires may be in a range of 20 nm to 100 nm.

A content of the metal nanostructure may be in a range of 10 parts by weight to 200 parts by weight based on 100 parts by weight of the porous carbon-based material.

The metal nanostructures may further include one or more selected from the group of metal nanofilms, metal nanorods, metal nanotubes, and metal nanoribbons.

The plurality of pores of the porous carbon-based material is connected to form a channel.

The porous carbon-based material has a 3-dimensional ordered macroporous structure.

The porous carbon-based material may be particles.

An average particle diameter of the porous carbon-based material may be in a range of 0.5 $\mu$m to 50 $\mu$m.

The porous carbon-based material may be amorphous carbon or crystalline carbon.

A diameter of the pore of the porous carbon-based material may be in a range of 50 nm to 300 nm.

A BET (Brunauer, Emmett and Teller) specific surface area of the porous carbon-based material may be in a range of 10 $m^2$/g to 1000 $m^2$/g.

An integrated strength ratio D/G ($I_{1360}/I_{1580}$) of a Raman D-line and G-line of the porous carbon-based material may be in a range of 0.1 to 2.

According to another aspect of the present invention, a method of preparing a composite negative active material includes: heat treating a composite of a pore-forming material and a carbon precursor to form a composite of the pore-forming material and carbon; etching the pore-forming material to form porous carbon having a 3-dimensional ordered macroporous structure or a structure in which the plurality of pores of the porous carbon-based material is connected to form a channel; impregnating the porous carbon with a solution containing a catalyst precursor to form the porous carbon impregnated with the catalyst; and introducing a metal precursor to the porous carbon impregnated with the catalyst to grow metal nanostructures in pores.

The pore-forming material may be silicon oxides.

The carbon precursor may be selected from the group of petroleum-based pitch, coal-based pitch, polyimide, polybenzimidazole, polyacrylonitrile, mesophase pitch, furfuryl alcohol, furan, phenol, cellulose, sucrose, polyvinyl chloride, and a mixture thereof.

A heat treatment in the forming of the composite of the pore-forming material and carbon may be performed within a temperature range of 800°C to 3000°C under an inert gas atmosphere.

The forming of the composite of the pore-forming material and carbon may further include using a graphitization-promoting catalyst selected from the group of salts, oxides, or nitrides of iron (Fe), Al, cobalt (Co), or Ni.

A diameter of the pore in the porous carbon may be in a range of 50 nm to 300 nm.

The catalyst may be selected from the group of Au, Ag, Ni, and Cu.

The metal precursor may include $SiH_4$ or $SiCl_4$.

The growing of the metal nanostructures may include a heat treating process within a temperature range of 400°C to 500°C.

At least a portion of the metal nanostructures may be nanowires.

According to another aspect of the present invention, a lithium secondary battery includes: a positive electrode including a positive active material; a negative electrode including a negative active material; and an electrolyte disposed between the positive electrode and the negative electrode, wherein the negative active material includes the foregoing composite negative active material.

BRIEF DESCRIPTION OF THE DRAWINGS

FIG. 1 is a scanning electron microscope (SEM) micrograph showing porous carbon according to an exemplary embodiment;

FIG. 2A is an SEM micrograph showing a composite negative active material according to Example 1;

FIG. 2B is an SEM micrograph showing a 10 times magnified image of FIG. 2a;

FIG. 2C is an SEM micrograph showing a composite negative active material according to Example 2;

FIG. 3A is an SEM micrograph showing a composite negative active material according to Comparative Example 1;

FIG. 3B is an SEM micrograph showing a composite negative active material according to Comparative Example 2;

FIG. 4A is a graph illustrating the experimental results of a nitrogen adsorption isotherm for the porous carbon of Preparation Example 1 at -196°C;

FIG. 4B is a graph illustrating the experimental results of a nitrogen adsorption isotherm for the composite negative active material of Example 1 at -196°C;

FIG. 4C is a graph illustrating the experimental results of a nitrogen adsorption isotherm for the composite negative active material of Example 2 at -196°C;

FIG. 5 is a graph illustrating capacity characteristics of the lithium secondary batteries according to Examples 3 and 4 and Comparative Examples 3 and 4; and

FIG. 6 is an exploded perspective view illustrating a lithium secondary battery according to an exemplary embodiment.

DETAILED DESCRIPTION OF THE EMBODIMENTS

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description.

Hereinafter, a composite negative active material according to an exemplary embodiment, a method of preparing the same, and a lithium secondary battery including the same will be described in more detail. However, the embodiment of the present invention is merely presented as an example, and the present invention is not limited thereto, but is only defined by the scopes of the following claims.

As an aspect of the present invention, provided is a composite negative active material including a porous carbon-based material and metal nanostructures disposed on one or more of a surface and inner pores of the porous carbon-based material.

With respect to a non-carbon-based material such as silicon (Si) having high capacity, cycle lifetime characteristics as well as mechanical properties may degrade due to changes from volume expansion and contraction thereof during lithium charge and discharge.

However, since the composite negative active material includes a porous carbon-based material and metal nanostructures disposed on one or more of a surface and inner pores of the porous carbon-based material, structural stability may be obtained by absorbing volume changes of the metal nanostructures through empty spaces in the porous carbon.

In the specification, the term "disposed" denotes a state in which metal nanostructures are embedded in a portion of a surface and inner pores of a porous carbon-based material and/or metal nanostructures are grown from the embedded surface and surfaces of the inner pores.

In the specification, the term "metal nanostructures" denotes one-, two-, and three-dimensional nanoscale metal nanostructures having a size of 500 nm or less. Further, the term "metal" denotes a broad definition including metal and metalloid.

The metal nanostructures may be grown based on metal catalyst particles disposed on the surface and the inner pores of the porous carbon-based material. A known vapour-liquid-solid (VLS) growth method may be used as a method of growing the metal nanostructures. The VLS growth method denotes a one-dimensional growing technique through adsorption of a reaction material on a catalyst material formed of nano-clusters or nanoscale droplets.

The metal catalyst particles may be selected from the group of gold (Au), copper (Cu), aluminum (Al), silver (Ag), and nickel (Ni), and for example, may be Au.

The metal nanostructures may include one or more elements selected from the group of groups 13 and 14 of the Periodic Table, and for example, may include one or more elements selected from the group 14 of the Periodic Table.

The metal nanostructures, for example, may include Si-based metal nanostructures. Since the metal nanostructures have a capacity density higher than that of graphite, a composite negative active material including the metal nanostructures may exhibit high capacity.

The metal nanostructures include metal nanowires.

In the specification, the term "metal nanowire" is used as a concept including a form of a metal wire having a diameter in a nanometer scale range and a high aspect ratio. Herein, the aspect ratio denotes a ratio of length to width (length : width).

An average diameter of the metal nanowires may be in a range of 20 nm to 100 nm, and for example, may be in a range of 30 nm to 50 nm. The metal nanowires having an average diameter within the foregoing range maintain specific surface area within an appropriate range such that a composite negative active material having improved energy density and lifetime characteristics may be obtained. A length of the metal nanowire may be in a range of 1 $\mu$m to 100 $\mu$m, for example, may be in a range of 5 $\mu$m to 50 $\mu$m, and for example, may be in a range of 10 $\mu$m to 30 $\mu$m.

A content of the metal nanostructure may be in a range of 10 parts by weight to 200 parts by weight based on 100 parts by weight of the porous carbon-based material, for example, may be in a range of 10 parts by weight to 150 parts by weight, and for example, may be in a range of 10 parts by weight to 70 parts by weight. When the content of the metal nanostructure is within the foregoing range, volume changes in the metal nanostructures by lithium charge and discharge may be effectively buffered.

The metal nanostructures may further include one or more selected from the group of metal nanofilms, metal nanorods, metal nanotubes, and metal nanoribbons.

In the specification, the term "metal nanofilm" denotes a metal film having a diameter or thickness of 500 nm or less, the term "metal nanorod" is similar to the metal nanowire defined in the specification but denotes a metal rod having an aspect ratio smaller than that of the metal nanowire, the term "metal nanotube" denotes a metal tube having a diameter of 500 nm, and the term "metal nanoribbon" denotes a metal ribbon having a width of 100 nm and an aspect ratio of 10 or more.

For example, the metal nanostructures may further include Si nanofilms or Si nanorods. For example, the metal nanofilms may be embedded in one or more of the surface and the inner pores of the porous carbon-based material, and the metal nanorods may be grown from the embedded surface and the surfaces of the inner pores of the porous carbon-based material.

The plurality of pores of the porous carbon-based material are connected to be able to form a channel. The metal nanostructures may be disposed in the channels of the porous carbon-based material.

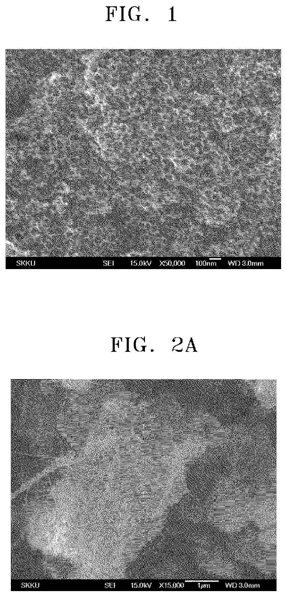

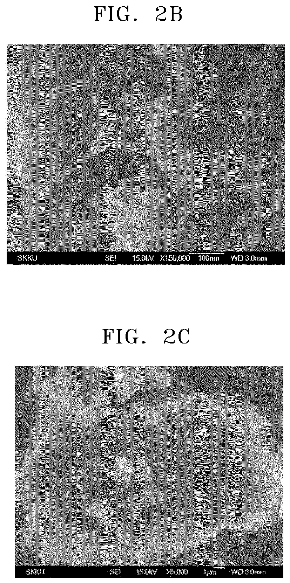

For example, as shown in FIGS. 2A and 2B, the metal nanostructures may be embedded in the channels formed through the connection of the plurality of pores of the porous carbon-based material, or the metal nanostructures may be grown from the surfaces of the channels of the embedded pores.

When the metal nanostructures are disposed in the channels of the porous carbon-based material, sufficient volume may be used without damaging the structure of the porous carbon-based material, and good contacts between the metal nanostructures and the porous carbon-based material may be obtained such that electron and ion conduction properties may be improved. As a result, high-rate and lifetime characteristics may be improved.

The porous carbon-based material has a 3-dimensional ordered macroporous structure or may have a structure similar thereto. The term "a structure similar thereto" includes a honeycomb-type structure having uniform pores or the like.

The porous carbon-based material may be particles.

An average particle diameter of the porous carbon-based material may be in a range of 0.5 $\mu$m to 50 $\mu$m, for example, may be in a range of 1 $\mu$m to 30 $\mu$m, and for example, may be in a range of 5 $\mu$m to 20 $\mu$m.

The porous carbon-based material may be amorphous carbon or crystalline carbon. Exemplary embodiments of the amorphous carbon may be soft carbon (low-temperature fired carbon) or hard carbon, mesophase pitch carbide, fired coke, etc. Exemplary embodiments of the crystalline carbon may be graphites such as shapeless, plate, flake, spherical, or fibrous natural graphite or artificial graphite. The porous carbon, for example, may be graphite, carbon particles, carbon nanotubes, or graphenes, but the porous carbon is not limited thereto.

A diameter of the pore of the porous carbon-based material may be in a range of 50 nm to 300 nm, for example, may be in a range of 50 nm to 250 nm, and for example, may be in a range of 50 nm to 200 nm. The porous carbon having a pore diameter within the foregoing range may not only have favorable high-rate characteristics of the lithium secondary battery because specific surface area generating a side reaction with an electrolyte is lessened, but lifetime characteristics may also be improved by minimizing the stress by the volume changes in the metal nanostructures.

A BET (Brunauer, Emmett and Teller) specific surface area of the porous carbon-based material may be in a range of 10 m$^2$/g to 1000 m$^2$/g, for example, may be in a range of 10 m$^2$/g to 100 m$^2$/g, and for example, may be in a range of 10 m$^2$/g to 50 m$^2$/g. When the BET specific surface area and the volume of the pores of the porous carbon-based material are within the foregoing ranges, the porous carbon-based material may have sufficient mechanical strength during lithium charge and discharge, and high-rate and lifetime characteristics of the lithium secondary battery may be improved.

An integrated strength ratio D/G ($I_{1360}/I_{1580}$) of a Raman D-line and G-line of the porous carbon-based material may be in a range of 0.1 to 2, for example, may be in a range of 0.1 to 1.9, and for example, may be in a range of 0.2 to 1.7. The porous carbon-based material having the integrated strength ratio D/G ($I_{1360}/I_{1580}$) of a Raman D-line and G-line within the foregoing range may have desired electrical conductivity.

As another aspect of the invention, a method of preparing a composite negative active material includes: heat treating a mixture of a pore-forming material and a carbon precursor to form a composite of the pore-forming material and carbon; etching the pore-forming material to form porous carbon having nanopores; impregnating the porous carbon with a solution containing a catalyst precursor to form the porous carbon impregnated with the catalyst; and introducing a metal precursor to the porous carbon impregnated with the catalyst to grow metal nanostructures in pores.

In the method of preparing a composite negative active material, a mixture is formed by mixing a pore-forming material and a carbon precursor.

The pore-forming material may be silicon oxide, and for example, may be SiO$_2$. The pore-forming material may form nanopores having a predetermined size and for example, may be powder or particles having a size range of 30 nm to 200 nm.

The carbon precursor may be selected from the group of petroleum-based pitch, coal-based pitch, polyimide, polybenzimidazole, polyacrylonitrile, mesophase pitch, furfuryl alcohol, furan, phenol, cellulose, sucrose, polyvinyl chloride, and a mixture thereof. For example, the phenol may be $C_6H_5OH$. For example, the carbon precursor may be petroleum-based pitch, coal-based pitch, polyimide, polybenzimidazole, polyacrylonitrile, mesophase pitch, or sucrose, but the carbon precursor is not limited thereto and any carbon precursor that is used in the art may be used.

A composite of the pore-forming material and carbon is formed by heat treating the mixture.

The heat treatment may be performed within a temperature range of 800°C to 3000°C under an inert gas atmosphere, and for example, may be performed within a temperature range of 800°C to 2000°C. The composite of the pore-forming material and carbon is formed by carbonizing the mixture for 0.5 hours to 10 hours, for example, 1 hour to 5 hours. A side reaction may be prevented in the foregoing case.

The forming of the composite of the pore-forming material and carbon may further include using a graphitization-promoting catalyst selected from the group of salts, oxides, or nitrides of iron (Fe), Al, cobalt (Co), or Ni. For example, oxides, nitrides, or chlorides of Fe, Al, Co, or Ni may be used.

Porous carbon having nanopores is formed by etching the pore-forming material.

A diameter of the pore in the porous carbon may be in a range of 50 nm to 300 nm, for example, may be in a range of 50 nm to 250 nm, and for example, may be in a range of 50 nm to 200 nm. The porous carbon having a pore diameter within the foregoing range has low specific surface area generating a side reaction with an electrolyte such that high-rate and lifetime characteristics may be improved.

The porous carbon is impregnated with a solution containing a precursor of a catalyst to form the porous carbon impregnated with the catalyst.

The catalyst may be selected from the group of Au, Ag, Ni, or Cu, and for example, may be Au. The porous carbon impregnated with the catalyst is formed by impregnating the porous carbon in a solution containing a precursor of the catalyst and drying.

Additionally, the porous carbon impregnated with the catalyst can be performed by a drying process and a heat treatment process. The drying process, for example, can be performed at 50°C to 100°C. The heat treatment process, for example, can be performed at 400°C to 900°C for 3 hours to 10 hours.

A metal precursor is introduced into the porous carbon impregnated with the catalyst to grow metal nanostructures in pores.

The metal precursor may include $SiH_4$ or $SiCl_4$, but the metal precursor is not limited thereto and any metal precursor that is used as a chemical vapour deposition (CVD) metal precursor may be used.

The growing of the metal nanostructures may include a process of heat treating within a temperature range of 400°C to 500°C, for example, may include a process of heat treating within a temperature range of 420°C to 490°C, and for example, may include a process of heat treating within a temperature range of 420°C to 470°C. For example, the process of heat treating may be performed for 1 minute to 10 hours, and for example, may be performed for 0.1 minute to 3 hours.

When the metal nanostructures are grown within the foregoing temperature range, a composite negative active material may be obtained, in which the metal nanostructures are disposed on one or more of a surface and inner pores of the porous carbon, or particularly, are embedded in channels formed through the connection of the plurality of pores of the porous carbon, and/or are grown from surfaces of the channels of the embedded pores of the porous carbon.

At least a portion of the metal nanostructures may be nanowires. An average diameter of the nanowires may be in a range 20 nm to 100 nm, for example, may be in a range 20 nm to 35 nm, and for example, may be in a range 20 nm to 30 nm.

A length of the nanowire may be in a range 1 $\mu$m to 100 $\mu$m, for example, may be in a range 5 $\mu$m to 50 $\mu$m, and for example, may be in a range 10 $\mu$m to 30 $\mu$m.

As another aspect of the present invention, a lithium secondary battery includes: a positive electrode including a positive active material; a negative electrode including a negative active material; and an electrolyte disposed between the positive electrode and the negative electrode, wherein the negative active material includes the foregoing composite negative active material.

Since the lithium secondary battery includes metal nanostructures disposed on one or more of a surface and inner pores of a porous carbon-based material, contacts between the metal nanostructures and the porous carbon-based material are good during lithium charge and discharge such that high-rate characteristics thereof may be improved, and lifetime characteristics may be improved because structural stability is improved by minimizing the stress by the volume changes in the metal nanostructures.

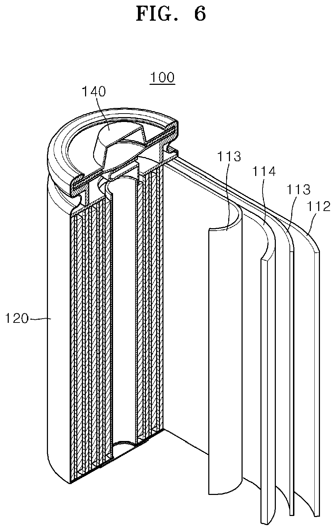

FIG. 6 is an exploded perspective view illustrating a lithium secondary battery according to an exemplary embodiment. In FIG. 6, a schematic drawing of a configuration of a cylindrical battery is shown, but a battery of the invention is not limited thereto and a prismatic or pouch type battery may be formed.

A lithium secondary battery may be classified as a lithium-ion battery, a lithium-ion polymer battery, or a lithium polymer battery according to the types of a separator and an electrolyte used, classified as a cylindrical type, a prismatic type, a coin type, or a pouch type battery according to its shape, and classified as a bulk type or a thin-film type according to its size. A shape of the lithium secondary battery according to the exemplary embodiment is not particularly limited, and structures and preparation methods of the foregoing batteries are widely known in the art and thus, detailed descriptions thereof are omitted.

When the lithium secondary battery is described in more detail with reference to FIG. 6, the lithium secondary battery 100 is a cylindrical type battery and is composed of an negative electrode 112, a positive electrode 114, a separator 113 disposed between the negative electrode 112 and the positive electrode 114, an electrolyte (not shown) impregnating the negative electrode 112, the positive electrode 114, and the separator 113, a battery case 120, and a sealing member 140 for sealing the battery case 120 as main elements. The negative electrode 112, the positive electrode 114 and the separator 113 are sequentially stacked, and then wound in a spiral shape. The lithium secondary battery 100 is then formed by containing the spiral-shaped wound stack in the battery case 120.

The negative electrode 112 includes a current collector and a negative active material layer formed on the current collector, and the negative active material layer includes a negative active material.

For the current collector used in the negative electrode 112, a copper, nickel, or stainless steel (SUS) current collector may be used according to a voltage range, and for example, a copper current collector may be used.

The negative active material includes the foregoing composite negative active material. Since contacts between Si nanostructures and porous carbon of a lithium secondary battery including the foregoing composite negative active material are good during charge and discharge, high-rate characteristics of the lithium secondary battery may be improved and lifetime characteristics thereof may be improved because structural stability is improved by minimizing the stress by the volume changes in the Si nanostructures during lithium charge and discharge.

The negative active material layer also includes a binder and may selectively further include a conductive agent.

The binder acts to bond negative active material particles to one another well and also acts to bond the negative active material to a current collector well. Exemplary embodiment of the binder may be polyvinyl alcohol, carboxymethyl cellulose, hydroxypropyl cellulose, diacetyl cellulose, polyvinyl chloride, carboxylic polyvinyl chloride, polyvinyl fluoride, a polymer including ethylene oxide, polyvinyl pyrrolidone, polyurethane, polytetrafluoroethylene, polyvinylidene fluoride, polyethylene, polypropylene, a styrene-butadiene rubber, an acrylated styrene-butadiene rubber, an epoxy resin, Nylon, etc. However, the binder is not limited thereto.

The conductive agent is used to provide conductivity to an electrode and any conductive agent may be used so long as it does not cause chemical changes in a constituted battery and is an electron conductive material. Exemplary embodiment of the conductive agent may be natural graphite, artificial graphite, carbon black, acetylene black, Ketjen black, carbon fibers, metal powders such as copper, nickel, aluminium, or silver, or metal fibers. Also, the conductive agent may be used by mixing conductive materials such as a polyphenylene derivative. Exemplary embodiment of the current collector may be a copper foil, a nickel foil, a stainless steel foil, a titanium foil, a nickel foam, a copper foam, a conductive metal coated polymer base, or combinations thereof.

In the exemplary embodiment, contents of the negative active material, binder, and conductive agent are at amounts generally used in a lithium secondary battery. For example, a weight ratio of the negative active material to a mixture of the conductive agent and the binder is in a range of 98 : 2 to 92 : 8, and a mixing ratio between the conductive agent and the binder may be in a range of 1 : 1.5 to 1 : 3. However, the ratios are not limited thereto.

The positive electrode 114 includes a current collector and a positive active material layer formed on the current collector.

Al may be used as a current collector, but the current collector is not limited thereto.

The positive active material is not particularly limited so long as it is generally used in the art, but more particularly, a compound capable of having reversible intercalation and deintercalation of lithium ions may be used. For example, one or more composite oxides of metals selected from cobalt, manganese, nickel, and combinations thereof and lithium may be used. As exemplary examples thereof, a compound expressed as one of the following chemical formulas may be used: $Li_aA_{1-b}B_bD_2$ (where $0.90 \leq a \leq 1.8$, $0 \leq b \leq 0.5$); $Li_aE_{1-b}B_bO_{2-c}D_c$ (where $0.90 \leq a \leq 1.8$, $0 \leq b \leq 0.5$, $0 \leq c \leq 0.05$); $LiE_{2-b}B_bO_{4-c}D_c$ (where $0 \leq b \leq 0.5$, $0 \leq c \leq 0.05$); $Li_aNi_{1-b-c}Co_bB_cD_\alpha$ (where $0.90 \leq a \leq 1.8$, $0 \leq b \leq 0.5$, $0 \leq c \leq 0.05$, $0 < \alpha \leq 2$); $Li_aNi_{1-b-c}Co_bB_cO_{2-\alpha}F_\alpha$ (where $0.90 \leq a \leq 1.8$, $0 \leq b \leq 0.5$, $0 \leq c \leq 0.05$, $0 < \alpha < 2$); $Li_aNi_{1-b-c}Co_bB_cO_{2-\alpha}F_2$ (where $0.90 \leq a \leq 1.8$, $0 \leq b \leq 0.5$, $0 \leq c \leq 0.05$, $0 < \alpha < 2$); $Li_aNi_{1-b-c}Mn_bB_cD_\alpha$ (where $0.90 \leq a \leq 1.8$, $0 \leq b \leq 0.5$, $0 \leq c \leq 0.05$, $0 < \alpha \leq 2$); $Li_aNi_{1-b-c}Mn_bB_cO_{2-\alpha}F_\alpha$ (where $0.90 \leq a \leq 1.8$, $0 \leq b \leq 0.5$, $0 \leq c \leq 0.05$, $0 < \alpha < 2$); $Li_aNi_{1-b-c}Mn_bB_cO_{2-\alpha}F_2$ (where $0.90 \leq a \leq 1.8$, $0 \leq b \leq 0.5$, $0 \leq c \leq 0.05$, $0 < \alpha < 2$ ); $Li_aNi_bE_cG_dO_2$ (where $0.90 \leq a \leq 1.8$, $0 \leq b \leq 0.9$, $0 \leq c \leq 0.5$, $0.001 \leq d \leq 0.1$); $Li_aNi_bCo_cMn_dGeO_2$ (where $0.90 \leq a \leq 1.8$, $0 \leq b \leq 0.9$, $0 \leq c \leq 0.5$, $0 \leq d \leq 0.5$, $0.001 \leq e \leq 0.1$); $Li_aNiG_bO_2$ (where $0.90 \leq a \leq 1.8$, $0.001 \leq b \leq 0.1$); $Li_aCoG_bO_2$ (where $0.90 \leq a \leq 1.8$, $0.001 \leq b \leq 0.1$); $Li_aMnG_bO_2$ (where $0.90 \leq a \leq 1.8$, $0.001 \leq b \leq 0.1$); $Li_aMnG_bO_4$ (where $0.90 \leq a \leq 1.8$, $0.001 \leq b \leq 0.1$); $QO_2$; $QS_2$; $LiQS_2$; $V_2O_5$; $LiV_2O_5$; $LiIO_2$; $LiNiVO_4$; $Li_{(3-f)}J_2(PO_4)_3$ ($0 \leq f \leq 2$); $Li_{(3-f)}Fe_2(PO_4)_3$ ($0 \leq f \leq 2$); and $LiFePO_4$.

Exemplary Examples of the positive active material may be $LiMn_2O_4$, $LiNi_2O_4$, $LiCoO_2$, $LiNiO_2$, $LiMnO_2$, $Li_2MnO_3$, $LiFePO_4$, $LiNi_xCo_yO_2$ ($0 < x \leq 0.15$, $0 < y \leq 0.85$), etc.

Exemplary examples of the positive active material may be $Li_{1+x}(M)_{1-x}O_2$ ($0.05 \leq x \leq 0.2$) and M may be a transition metal. Examples of the transition metal M may be Ni, Co, Mn, Fe, or Ti, but the transition metal M is not limited thereto.

Since the positive active material has a larger ratio of the lithium ion with than that of the transition metal M, a capacity of a lithium secondary battery including a positive electrode including the positive active material may be further improved.

In the above chemical formulas, A is Ni, Co, Mn, or a combination thereof; B is Al, Ni, Co, Mn, Cr, Fe, Mg, Sr, V, rare earth elements, or a combination thereof; D is O, F, S, P, or a combination thereof; E is Co, Mn, or a combination thereof; F is F, S, P, or a combination thereof; G is Al, Cr, Mn, Fe, Mg, La, Ce, Sr, V, or a combination thereof; Q is Ti, Mo, Mn, or a combination thereof; I is Cr, V, Fe, Sc, Y, or a combination thereof; J is V, Cr, Mn, Co, Ni, Cu, or a combination thereof.

A compound having a coating layer on the foregoing compounds may be used, or a compound may be used by mixing the foregoing compounds and the compound having a coating layer. The coating layer may include a compound of a coating element such as oxide, hydroxide, oxyhydroxide, oxycarbonate, or hydroxycarbonate of a coating element. The compound constituting the coating layer may be amorphous or crystalline. Exemplary embodiment of the coating element included in the coating layer may be Mg, Al, Co, K, Na, Ca, Si, Ti, V, Sn, Ge, Ga, B, As, Zr, and combinations thereof. Any coating method may be used for a process of forming a coating layer as long as coating may be performed by a method (e.g., spray coating, dipping, etc.) that does not adversely affect the physical properties of the positive active material due to using such coating elements on the foregoing compounds. Detailed description of the coating method is not provided because it is obvious to those skilled in the art.

The positive active material layer may also include a binder and a conductive agent.

The binder acts to bond positive active material particles to one another well and also acts to bond the positive active material to a current collector well. Exemplary embodiment of the binder may be polyvinyl alcohol, carboxymethyl cellulose, hydroxypropyl cellulose, diacetyl cellulose, polyvinyl chloride, carboxylated polyvinyl chloride, polyvinyl fluoride, a polymer including ethylene oxide, polyvinyl pyrrolidone, polyurethane, polytetrafluoroethylene, polyvinylidene fluoride, polyethylene, polypropylene, a styrene-butadiene rubber, an acrylated styrene-butadiene rubber, an epoxy resin, Nylon, etc. However, the binder is not limited thereto.

The conductive agent is used to provide conductivity to an electrode and any conductive agent may be used so long as it does not cause chemical changes in a battery and is an electron conductive material. Exemplary embodiment of the conductive agent may be natural graphite, artificial graphite, carbon black, acetylene black, Ketjen black, carbon fibers, metal powders such as copper, nickel, aluminium, or silver, or metal fibers. Also, the conductive agent may be used by mixing one or more conductive materials such as a polyphenylene derivative.

The contents of the cathode active material, binder, and conductive agent are at amounts generally used in a lithium secondary battery. For example, a weight ratio of the positive active material to a mixture of the conductive agent and the binder is in a range of 98 : 2 to 92 : 8, and a mixing weight ratio between the conductive agent and the binder may be in a range of 1 : 1.5 to 1 : 3. However, the ratios are not limited thereto.

Active material compositions are prepared by mixing active materials, binders, and conductive agents in a solvent, and the negative electrode 112 and the positive electrode 114 are then prepared by coating the current collectors with the active material compositions, respectively. Since the foregoing method of preparing an electrode is widely known in the art, detailed descriptions thereof are omitted in the specification. N-methylpyrrolidone or the like may be used as the solvent, but the solvent is not limited thereto.

A separator may exist between the positive electrode and the negative electrode according to the type of a lithium secondary battery. Polyethylene, polypropylene, polyvinylidene fluoride, or a multilayer having two or more layers thereof may be used as the separator, and a mixed multilayer, such as a polyethylene/polypropylene double- layered separator, a polyethylene/polypropylene/polyethylene triple-layered separator, or a polypropylene/polyethylene/polypropylene triple-layered separator, may be used as the separator.

The electrolyte (not shown) impregnating the negative electrode 112, the positive electrode 114, and the separator 113 may include a non-aqueous-based organic solvent and a lithium salt.

The non-aqueous-based organic solvent may act as a medium in which ions participating in an electrochemical reaction of a battery may move.

A carbonate-based, ester-based, ether-based, ketone-based, alcohol-based, or aprotic solvent may be used as the non-aqueous-based organic solvent. Dimethyl carbonate (DMC), diethyl carbonate (DEC), dipropyl carbonate (DPC), methylpropyl carbonate (MPC), ethylpropyl carbonate (EPC), ethylmethyl carbonate (EMC), ethylene carbonate (EC), propylene carbonate (PC), or butylene carbonate (BC) may be used as the carbonate-based solvent. Methyl acetate, ethyl acetate, n-propyl acetate, dimethyl acetate, methyl propionate, ethyl propionate, γ-butyrolactone, decanolide, valerolactone, mevalonolactone, or caprolactone may be used as the ester-based solvent. Dibutyl ether, tetraglyme, diglyme, dimethoxyethane, 2-methyltetrahydrofuran, or tetrahydrofuran may be used as the ether-based solvent, and cyclohexanone may be used as the ketone-based solvent. Also, ethyl alcohol or isopropyl alcohol may be used as the alcohol-based solvent, and nitriles such as R-CN (where R is a hydrocarbon group with a carbon number of about 2 to about 20 having a linear, branched, or cyclic structure and may include a double-bonded aromatic ring or an ether bond), amides such as dimethylformamide, dioxolanes such as 1,3-dioxolane, or sulfolanes may be used as the aprotic solvent.

The non-aqueous-based organic solvent may be used alone or by mixing one or more non-aqueous-based organic solvents. When the non-aqueous-based organic solvent is used by mixing one or more non-aqueous-based organic solvents, a mixing weight ratio may be appropriately adjusted according to the desired battery performance and this may be widely understood by those skilled in the art.

The lithium salt is dissolved in an organic solvent, enables basic operation of a lithium battery by acting as a source of lithium ions in the battery, and is a material for promoting transfer of lithium ions between a positive electrode and a negative electrode. For example, the lithium salt may include one or more selected from the group of $LiPF_6$, $LiBF_4$, $LiSbF_6$, $LiAsF_6$, $LiN(SO_2C_2F_5)_2$, $Li(CF_3SO_2)_2N$, $LiC_4F_9SO_3$, $LiClO_4$, $LiAlO_2$, $LiAlCl_4$, $LiN(C_xF_{2x+1}SO_2)$ $(C_yF_{2y+1}SO_2)$ (where x and y are natural numbers), $LiCl$, $LiI$, and $LiB(C_2O_4)_2$ (lithium bis(oxalato) borate (LiBOB)) as a supporting electrolyte salt. A concentration of the lithium salt may be in a range of about 0.1 M to about 2.0 M. When the concentration of the lithium salt is included within this range, an electrolyte may have appropriate conductivity and viscosity. Therefore, excellent electrolyte performance may be obtained and lithium ions may be effectively transferred.

Hereinafter, particular examples of the present invention are described. However, the following examples are merely presented to particularly exemplify and described the present invention, and the present invention is not limited thereto.

Also, since those skilled in the art may sufficiently and technically infer contents not described herein, the descriptions thereof are omitted.

(Preparation of Porous Carbon)

**Preparation Example 1**

$SiO_2$ nanopowder having an average diameter of about 80 nm and petroleum-based pitch (AR mesophase pitch, Mitsubishi Gas Chemical Co., Ltd.) were mixed in a weight ratio of about 50 : 50. The mixture was heat treated for 3-5 hours at about 1000°C in a nitrogen gas atmosphere and carbonized to form a composite of $SiO_2$ and carbon. The composite was etched by dipping in a 5M NaOH solution for about 24 hours to prepare porous carbon having an average pore diameter of about 80 nm. An integrated strength ratio D/G ($I_{1360}/I_{1580}$) of a Raman D-line and G-line of the porous carbon was about 1.8 and an SEM micrograph of the prepared porous carbon is shown in FIG. 1.

**Comparative Preparation Example 1**

Graphite (MCMB2528: Osaka Gas Co., Ltd.) was obtained and prepared as it is.

**Comparative Preparation Example 2**

Amorphous carbon (Super-P: TIMCAL Graphite & Carbon) was obtained and prepared as it is.

(Preparation of Composite Negative Active Materials)

**Example 1**

About 2 g of the porous carbon prepared in Preparation Example 1 was impregnated in about 200 cc of a 0.001 M $HAuCl_4$ (Sigma-Aldrich Corporation) ethanol solution and stirred for about 24 hours. Porous carbon powder impregnated with Au was then prepared by slowly drying ethanol at about 80°C and heat treating at about 500°C for about 6 hours. The porous carbon powder was put into a small tube having holes in front and rear sides thereof, and the holes in the both sides were blocked with quartz wool so as to prevent the powder from being blown away during pumping in a CVD chamber. About 10 sccm of silane ($SiH_4$, about 10% diluted $H_2$ gas) gas was injected into the CVD chamber to make a total pressure of about 1.07 kPa (8 Torr). The small tube put in the center of the CVD chamber was heated at about 490°C for about 5 minutes. The temperature was decreased to about 440°C for about 10 minutes and then maintained for about 2 hours to obtain a composite negative active material in which Si nanowires were grown in pores included in the porous carbon. The weight of the composite negative active material was about 0.18 g and the results of SEM microscopy of the composite negative active material may be confirmed by the FIGS. 2A and 2B.

**Example 2**

A composite negative active material was obtained in the same manner as Example 1 except that the temperature was decreased to about 460°C for about 10 minutes and then maintained for about 2 hours instead of decreasing the temperature to about 440°C for about 10 minutes and then maintaining it for about 2 hours. The weight of the composite negative active material was about 0.19 g and the results of SEM microscopy of the composite negative active material may be confirmed by FIG. 2C.

**Comparative Example 1**

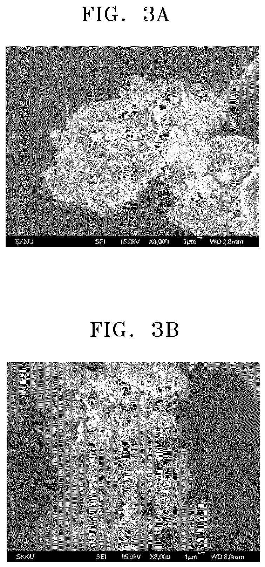

A composite negative active material was obtained in the same manner as Example 1 except that the graphite of Comparative Preparation Example 1 was used instead of using the porous carbon powder impregnated with Au. The results of SEM microscopy of the composite negative active material may be confirmed by FIG. 3A.

**Comparative Example 2**

A composite negative active material was obtained in the same manner as Example 1 except that the amorphous carbon of Comparative Preparation Example 2 was used instead of using the porous carbon powder impregnated with Au. The results of SEM microscopy of the composite negative active material may be confirmed by FIG. 3B.

(Preparation of Lithium Secondary Batteries)

**Example 3**

The composite negative active material of Example 1, graphite, and a polyamideimide binder were mixed in a weight ratio of about 3 : 6 : 1 in an N-methylpyrrolidone solvent to prepare an negative active material slurry. The negative active material slurry was coated on about 15 $\mu$m thick copper foil and dried at about 200°C for about 60 minutes, and an negative electrode was then prepared by roll-pressing. A coin-type half-cell was prepared in a helium-filled glove box by using the negative electrode, a lithium counter electrode, a microporous polypropylene separator (Celgard 3501), and an electrolyte having a lithium salt of 1.3 M LiPF$_6$ and a volume ratio of ethylene carbonate : diethylene carbonate : fluoroethylene carbonate (EC : DEC : FEC) of about 2 : 6 : 2.

**Example 4**

A coin-type half-cell was prepared in the same manner as Example 3 except that the composite negative active material of Example 2 was used instead of using the composite negative active material of Example 1.

**Comparative Example 3**

A coin-type half-cell was prepared in the same manner as Example 3 except that the composite negative active material of Comparative Example 1 was used instead of using the composite negative active material of Example 1.

**Comparative Example 4**

A coin-type half-cell was prepared in the same manner as Example 3 except that the composite negative active material of Comparative Example 2 was used instead of using the composite negative active material of Example 1.

(Performance Evaluations of Composite Negative Active Materials and Lithium Secondary Batteries)

**Evaluation Example 1: Scanning Electron Microscope (SEM) Micrographs**

The composite negative active materials of Examples 1 and 2 and Comparative Examples 1 and 2 were photographed by using a SEM. The results thereof are presented in FIGS. 2A to 2C, 3A, and 3B, respectively.
Referring to FIGS. 2A and 2B, it is confirmed that composite particles were formed in the composite negative active material of Example 1, in which most of Si nanowires or Si nanofilms were disposed in pores and channels connecting the plurality of pores inside porous carbon, and thus, the Si nanowires were embedded, and Si nanowires were also grown in the pores and the channels embedded in the porous carbon.
Referring to FIG. 2C, it is confirmed that composite particles were formed in the composite negative active material of Example 2, in which most of Si nanowires and Si nanofilms were embedded in surface pores of porous carbon and Si nanowires were also grown from surfaces of the pores embedded in the porous carbon.
Referring to FIG. 3A, it is confirmed that Si nanofilms were grown on a surface of graphite and Si nanowires were grown thereon in the composite negative active material of Comparative Example 1.
Referring to FIG. 3B, it is confirmed that Si nanofilms were only grown on a surface of amorphous carbon and Si nanowires were not grown thereon in the composite negative active material of Comparative Example 2.

**Evaluation Example 2: Nitrogen Adsorption Isotherm Analysis**

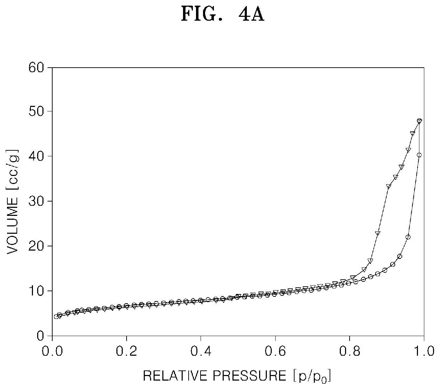

Nitrogen adsorption isotherms of the porous carbon of Preparation Example 1 and the composite negative active materials of Examples 1 and 2, which were vacuum degassed at about 200°C for about 300 minutes, were measured by using a TriStar gas adsorption analyzer of Micromeritics Instrument Corporation, and BET specific surface area was calculated within a relative nitrogen pressure ($P/P_0$) range of about 0 to about 1.0 by using a BET method.
The results thereof are shown in Table 1, and FIGS. 4A to 4C.
FIGS. 4A to 4C illustrate amounts (cc) of nitrogen adsorbed for 1 g of porous carbon samples under ambient conditions according to relative nitrogen pressure ($P/P_0$) and normalized by the specific gravity of liquid nitrogen at a corresponding temperature, in which a lower line represents an adsorption curve of nitrogen gas and an upper line represents a desorption curve of nitrogen gas.

[Table 1]

| Category | BET specific surface area of porous carbon ($m^2/g$) |
|---|---|
| Preparation Example 1 | 24 |
| Example 1 | 10 |
| Example 2 | 19 |

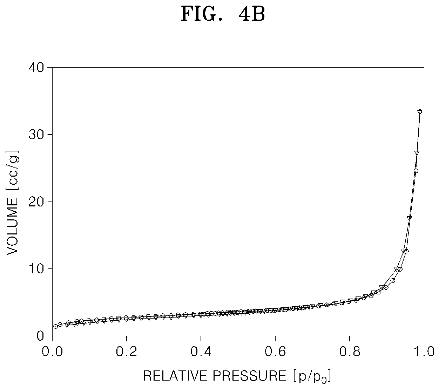

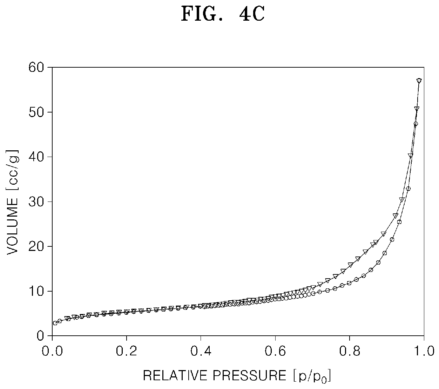

Referring to Table 1 and FIG. 4A, it is confirmed that BET specific surface area of the porous carbon of Preparation Example 1 was about 24 $m^2/g$. Also, referring to Table 1 and FIGS. 4B and 4C, it is confirmed that BET specific surface areas of the composite negative active materials of Examples 1 and 2 were about 10 $m^2/g$ and about 19 $m^2/g$, respectively.

**Evaluation Example 3: Capacity Characteristics of Lithium Secondary Batteries**

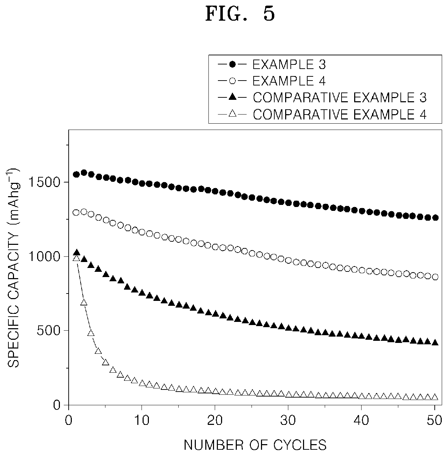

Cycle lifetime characteristics were evaluated by performing about 50 cycles of charge and discharge at 0.1 C in a voltage range of about 0.001 V to about 1.5 V on the coin-type half-cells of Examples 3 and 4 and Comparative Examples 3 and 4, and the results thereof are presented in Table 2 and FIG. 5.
Discharge capacity in each cycle and discharge capacity in a 50th cycle were measured for each battery and cycle capacity retention ratios were calculated therefrom. The capacity retention ratio (%) is expressed as Equation 1 below.

[Equation 1]

Capacity retention ratio (%) = discharge capacity in a 50th cycle / discharge capacity in the 1st cycle

[Table 2]

| Category | Discharge capacity in the 1st cycle (mAh/g) | Discharge capacity in a 50th cycle (mAh/g) | Capacity retention ratio (%) |
|---|---|---|---|
| Example 3 | 1550 | 1262 | 81.4 |
| Example 4 | 1295 | 866 | 66.9 |
| Comparative Example 3 | 1025 | 420 | 41.0 |
| Comparative Example 4 | 985 | 50 | 5.1 |

Referring to Table 2 and FIG. 5, the capacitance retention ratios of the lithium secondary batteries prepared in Examples 3 and 4 were more improved than those of Comparative Examples 3 and 4.

Therefore, it may be understood that structural stabilities during charge and discharge of the lithium secondary batteries of Examples 3 and 4 including the composite negative active materials of Examples 1 and 2, i.e., lithium batteries including composite negative active materials, in which Si nanostructures and porous carbon were included, and the Si nanostructures (Si nanowires and Si nanofilms) were disposed on one or more of a surface and inner pores of the porous carbon, were improved in comparison to those of the lithium batteries of Comparative Examples 3 and 4, i.e., lithium batteries including composite negative active materials, in which Si nanowires were grown on a surface of graphite and Si nanofilms were formed on amorphous carbon, and thus, lifetime characteristics thereof were improved.

Since structural stability during charge and discharge of a composite negative active material according to an aspect of the present invention is improved by including a porous carbon-based material and metal nanostructures disposed on one or more of a surface and inner pores of the porous carbon-based material, lifetime characteristics thereof may be improved.

While the present invention has been particularly shown and described with reference to exemplary embodiments thereof, it will be understood by those of ordinary skill in the art that various changes in form and details may be made therein without departing from the scope of the present invention as defined by the following claims.

## Claims

1. A composite negative active material comprising:

    a porous carbon-based material; and
    metal nanostructures disposed on one or more of a surface and inner pores of the porous carbon-based material,
    wherein the porous carbon-based material has a 3-dimensional ordered macroporous structure or a structure in which the plurality of pores of the porous carbon-based material is connected to form a channel, and
    wherein the metal nanostructures are grown based on metal catalyst particles disposed on the surface and the inner pores of the porous carbon-based material, and
    wherein the metal nanostructures are metal nanowires and optionally further comprise one or more selected from the group of metal nanofilms, metal nanorods, metal nanotubes, and metal nanoribbons.

2. The composite negative active material of claim 1, wherein the metal catalyst particles are selected from the group of gold (Au), copper (Cu), aluminum (Al), silver (Ag), and nickel (Ni).

3. The composite negative active material of claim 1 or 2, wherein the metal nanostructures comprise one or more elements selected from the group of groups 13 and 14 of the Periodic Table such as Si-based metal nanostructures.

4. The composite negative active material of any of claims 1-3, wherein the porous carbon-based material is particles preferably having an average particle diameter in a range of 0.5 $\mu$m to 50 $\mu$m.

5. The composite negative active material of any of claims 1-4, wherein a diameter of the pore of the porous carbon-based material is in a range of 50 nm to 300 nm.

6. A method of preparing a composite negative active material according to any of claim 1-5, the method comprising:

    heat treating a mixture of a pore-forming material and a carbon precursor to form a composite of the pore-forming material and carbon;
    etching the pore-forming material to form porous carbon having a 3-dimensional ordered macroporous structure or a structure in which the plurality of pores of the porous carbon-based material is connected to form a channel;
    impregnating the porous carbon with a solution containing a catalyst precursor to form the porous carbon impregnated with the catalyst; and
    introducing a metal precursor to the porous carbon impregnated with the catalyst to grow metal nanostructures in pores, wherein the metal nanostructures are metal nanowires and optionally further comprise one or more selected from the group of metal nanofilms, metal nanorods, metal nanotubes, and metal nanoribbons.

7. The method of claim 6, wherein the pore-forming material is silicon oxide.

8. The method of claim 6 or 7, wherein the carbon precursor is selected from the group of petroleum-based pitch, coal-based pitch, polyimide, polybenzimidazole, polyacrylonitrile, mesophase pitch, furfuryl alcohol, furan, phenol, cellulose, sucrose, polyvinyl chloride, and a mixture thereof.

**9.** The method of any of claims 6-8, wherein the forming of the composite of the pore-forming material and carbon further comprises a graphitization-promoting catalyst selected from the group of salts, oxides, or nitrides of iron (Fe), Al, cobalt (Co), or Ni.

**10.** The method of any of claims 6-9, wherein the catalyst is selected from the group of Au, Ag, Ni, and Cu.

**11.** The method of any of claims 6-10, wherein the metal precursor comprises $SiH_4$ or $SiCl_4$.

**12.** A lithium secondary battery comprising:

a positive electrode including a positive active material;
an negative electrode including an negative active material; and
an electrolyte disposed between the positive electrode and the negative electrode,
wherein the negative active material includes the composite negative active material of any one of claims 1 to 5.

**Patentansprüche**

**1.** Negativ aktives Verbundmaterial, das Folgendes umfasst:

ein poröses Material auf Kohlenstoffbasis; und
Metallnanostrukturen, die auf einem oder mehreren von einer Fläche und inneren Poren des porösen Materials auf Kohlenstoffbasis angeordnet sind,
wobei das poröse Material auf Kohlenstoffbasis eine 3-dimensionale geordnete makroporöse Struktur oder eine Struktur, in der die Vielzahl von Poren des porösen Materials auf Kohlenstoffbasis verbunden ist, um einen Kanal zu bilden, aufweist und
wobei die Metallnanostrukturen basierend auf Metallkatalysatorpartikeln gezüchtet sind, die auf der Fläche und den inneren Poren des porösen Materials auf Kohlenstoffbasis angeordnet sind, und
wobei die Metallnanostrukturen Metallnanodrähte sind und optional ferner eines oder mehrere umfassen ausgewählt aus der Gruppe von Metallnanofolien, Metallnanostäbchen, Metallnanoröhren und Metallnanobändern.

**2.** Negativ aktives Verbundmaterial nach Anspruch 1, wobei die Metallkatalysatorpartikel ausgewählt sind aus der Gruppe von Gold (Au), Kupfer (Cu), Aluminium (Al), Silber (Ag) und Nickel (Ni).

**3.** Negativ aktives Verbundmaterial nach Anspruch 1 oder 2, wobei die Metallnanostrukturen ein oder mehrere Elemente umfassen ausgewählt aus der Gruppe der Gruppen 13 und 14 des Periodensystems, wie beispielsweise Metallnanostrukturen auf Si-Basis.

**4.** Negativ aktives Verbundmaterial nach einem der Ansprüche 1-3, wobei das poröse Material auf Kohlenstoffbasis Partikel sind, die vorzugsweise einen durchschnittlichen Partikeldurchmesser in einem Bereich von 0,5 $\mu$m bis 50 $\mu$m aufweisen.

**5.** Negativ aktives Verbundmaterial nach einem der Ansprüche 1-4, wobei ein Durchmesser der Pore des porösen Materials auf Kohlenstoffbasis in einem Bereich von 50 nm bis 300 nm liegt.

**6.** Verfahren zur Herstellung eines negativ aktiven Verbundmaterials nach einem der Ansprüche 1-5, wobei das Verfahren Folgendes umfasst:

Wärmebehandeln einer Mischung aus einem porenbildenden Material und einem Kohlenstoffvorläufer, um ein Verbundmaterial aus dem porenbildenden Material und Kohlenstoff zu bilden;
Ätzen des porenbildenden Materials, um porösen Kohlenstoff zu bilden, der eine 3-dimensionale geordnete makroporöse Struktur oder eine Struktur, in der die Vielzahl von Poren des porösen Materials auf Kohlenstoffbasis verbunden ist, um einen Kanal zu bilden, aufweist;
Imprägnieren des porösen Kohlenstoffs mit einer Lösung, die einen Katalysatorvorläufer enthält, um den mit dem Katalysator imprägnierten porösen Kohlenstoff zu bilden; und
Einführen eines Metallvorläufers in den mit dem Katalysator imprägnierten porösen Kohlenstoff, um Metallnanostrukturen in Poren zu züchten, wobei die Metallnanostrukturen Metallnanodrähte sind und optional ferner eines oder mehrere umfassen ausgewählt aus der Gruppe von Metallnanofolien, Metallnanostäbchen, Metallnanoröhren und Metallnanobändern.

7. Verfahren nach Anspruch 6, wobei das porenbildende Material Siliciumoxid ist.

8. Verfahren nach Anspruch 6 oder 7, wobei der Kohlenstoffvorläufer ausgewählt ist aus der Gruppe von Pech auf Erdölbasis, Pech auf Kohlebasis, Polyimid, Polybenzimidazol, Polyacrylnitril, Mesophasenpech, Furfurylalkohol, Furan, Phenol, Cellulose, Sucrose, Polyvinylchlorid und einer Mischung davon.

9. Verfahren nach einem der Ansprüche 6-8, wobei das Bilden des Verbundmaterials aus dem porenbildenden Material und Kohlenstoff ferner einen graphitisierungsfördernden Katalysator umfasst ausgewählt aus der Gruppe von Salzen, Oxiden oder Nitriden von Eisen (Fe), Al, Kobalt (Co) oder Ni.

10. Verfahren nach einem der Ansprüche 6-9, wobei der Katalysator ausgewählt ist aus der Gruppe von Au, Ag, Ni und Cu.

11. Verfahren nach einem der Ansprüche 6-10, wobei der Metallvorläufer $SiH_4$ oder $SiCl_4$ umfasst.

12. Lithiumakkumulator, der Folgendes umfasst:

eine positive Elektrode, die ein positiv aktives Material einschließt;
eine negative Elektrode, die ein negativ aktives Material einschließt; und
einen Elektrolyten, der zwischen der positiven Elektrode und der negativen Elektrode angeordnet ist, wobei das negativ aktive Material das negativ aktive Verbundmaterial nach einem der Ansprüche 1 bis 5 einschließt.

**Revendications**

1. Matériau actif négatif composite comprenant :

un matériau à base de carbone poreux; et
des nanostructures métalliques disposées sur un ou plusieurs éléments parmi une surface et des pores internes du matériau à base de carbone poreux, dans lequel le matériau à base de carbone poreux a une structure macroporeuse ordonnée tridimensionnelle ou une structure dans laquelle la pluralité de pores du matériau à base de carbone poreux est connectée pour former un canal, et
dans lequel les nanostructures métalliques sont mises à croître sur la base de particules de catalyseur métallique disposées sur la surface et les pores internes du matériau à base de carbone poreux, et dans lequel les nanostructures métalliques sont des nanofils métalliques et comprennent en outre facultativement un ou plusieurs éléments sélectionnés dans le groupe constitué par des nanofilms métalliques, des nanotiges métalliques, des nanotubes métalliques, et des nanorubans métalliques.

2. Matériau actif négatif composite selon la revendication 1, dans lequel les particules de catalyseur métallique sont sélectionnées dans le groupe constitué par l'or (Au), le cuivre (Cu), l'aluminium (Al), l'argent (Ag), et le nickel (Ni).

3. Matériau actif négatif composite selon la revendication 1 ou 2, dans lequel les nanostructures métalliques comprennent un ou plusieurs éléments sélectionnés dans le groupe des groupes 13 et 14 du Tableau périodique telles que des nanostructures métalliques à base de Si.

4. Matériau actif négatif composite selon l'une quelconque des revendications 1 à 3, dans lequel le matériau à base de carbone poreux consistent en particules ayant préférablement un diamètre de particule moyen dans une plage de 0,5 pm à 50 pm.

5. Matériau actif négatif composite selon l'une quelconque des revendications 1 à 4, dans lequel un diamètre du pore du matériau à base de carbone poreux est dans une plage de 50 nm à 300 nm.

6. Procédé de préparation d'un matériau actif négatif composite selon l'une quelconque des revendications 1 à 5, le procédé comprenant :

le traitement par la chaleur d'un mélange d'un matériau porogène et d'un précurseur de carbone pour former un composite du matériau porogène et de carbone ;

la gravure du matériau porogène pour former du carbone poreux ayant une structure macroporeuse ordonnée tridimensionnelle ou une structure dans laquelle la pluralité de pores du matériau à base de carbone poreux est connectée pour former un canal ;

l'imprégnation du carbone poreux avec une solution contenant un précurseur catalytique pour former le carbone poreux imprégné avec le catalyseur ; et

l'introduction d'un précurseur métallique dans le carbone poreux imprégné avec le catalyseur pour faire croître les nanostructures métalliques dans les pores, dans lequel les nanostructures métalliques sont des nanofils métalliques et facultativement comprennent en outre facultativement un ou plusieurs éléments sélectionnés dans le groupe constitué par des nanofilms métalliques, des nanotiges métalliques, des nanotubes métalliques, et des nanorubans métalliques.

7. Procédé selon la revendication 6, dans lequel le matériau porogène est l'oxyde de silicium.

8. Procédé selon la revendication 6 ou 7, dans lequel le précurseur de carbone est sélectionné dans le groupe constitué par le brai à base de pétrole, le brai à base de charbon, le polyimide, le polybenzimidazole, le polyacrylonitrile, le brai mésophase, l'alcool furfurylique, le furane, le phénol, la cellulose, le saccharose, le chlorure de polyvinyle, et un mélange de ceux-ci.

9. Procédé selon l'une quelconque des revendications 6 à 8, dans lequel la formation du composite du matériau porogène et de carbone comprend en outre un catalyseur favorisant la graphitisation sélectionné dans le groupe constitué par des sels, des oxydes, ou des nitrures de fer (Fe), de Al, de cobalt (Co), ou de Ni.

10. Procédé selon l'une quelconque des revendications 6 à 9, dans lequel le catalyseur est sélectionné dans le groupe constitué de Au, Ag, Ni, et Cu.

11. Procédé selon l'une quelconque des revendications 6 à 10, dans lequel le précurseur métallique comprend du $SiH_4$ ou du $SiCl_4$.

12. Batterie secondaire de lithium comprenant :

une électrode positive incluant un matériau actif positif ;

une électrode négative incluant un matériau actif négatif ; et

un électrolyte disposé entre l'électrode positive et l'électrode négative, dans lequel le matériau actif négatif inclut le matériau actif négatif composite selon l'une quelconque des revendications 1 à 5.

FIG. 1

FIG. 2A

FIG. 2B

FIG. 2C

FIG. 3A

FIG. 3B

FIG. 4A

FIG. 4B

FIG. 4C

## FIG. 5

Legend:
- —●— EXAMPLE 3
- —○— EXAMPLE 4
- —▲— COMPARATIVE EXAMPLE 3
- —△— COMPARATIVE EXAMPLE 4

Y-axis: SPECIFIC CAPACITY (mAhg$^{-1}$)

X-axis: NUMBER OF CYCLES

FIG. 6

**EP 2 597 707 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102005011940 A1
- US 20090068553 A1

- WO 2010135446 A1

**Non-patent literature cited in the description**

- **WANLI XU et al.** *Journal of the Electrochemical Society,* 2010, vol. 157 (1), A41-A45
- **A. MAGASINSKI et al.** *Nature Materials,* 2010, vol. 9, 353-358

- **ZHIYONG WANG et al.** *Carbon,* 2008, vol. 46, 1702-1710